# EUROPÄISCHE PATENTSCHRIFT

(11) **EP 4 046 878 B1**
(45) Veröffentlichungstag und Bekanntmachung des Hinweises auf die Patenterteilung: **06.09.2023**
(21) Anmeldenummer: 22157739.8
(22) Anmeldetag: 21.02.2022
(51) Int. Cl.: B60R 21/11, E02F 9/16

(54) **KABINENSCHUTZ FÜR EINE ARBEITSMASCHINENKABINE**
PROTECTION FOR A WORKING MACHINE CABIN
PROTECTION POUR UNE CABINE DE MACHINE DE TRAVAIL

(30) Priorität: 22.02.2021 DE 102021104167
(43) Veröffentlichungstag der Anmeldung: 24.08.2022
(73) Patentinhaber: Echle Hartstahl GmbH, 77709 Wolfach (DE)
(72) Erfinder: ECHLE, Lothar, 77709 Wolfach (DE)
(74) Vertreter: Patentanwälte und Rechtsanwalt Weiß, Arat & Partner mbB

(56) Entgegenhaltungen:
- EP-B1- 2 639 361
- DE-A1- 4 404 415
- JP-A- H08 100 442
- JP-A- 2003 232 053

## Beschreibung

### Technisches Gebiet

Die Erfindung betrifft einen Kabinenschutz für eine Arbeitsmaschinenkabine nach dem Oberbegriff des Anspruchs 1.

### Stand der Technik

Derartige Kabinenschutzvorrichtungen sind bereits in vielfältiger Form und Ausgestaltung bekannt und gebräuchlich. So wird beispielsweise in der EP 2 639 361 B1 ein Kabinenschutz gemäß dem Oberbegriff von Anspruch 1 offenbart, welcher ein Frontschutzgitter aufweist, wobei ein Frontschutzgitter zumindest teilweise in ein Kabinenschutzdach eingeschoben werden kann.

Ferner ist die DE 44 04 415 A1 welche ein Fahrerhaus für ein Fahrzeug, insbesondere für einen Bagger offenbart, wobei das Fahrerhaus zum Öffnen und Schließen eines Frontfensters ein zweiteiliges und bewegliches Oberfenster und Unterfenster aufweist.

In diesem Zusammenhang ist auch die JP 2003 232 053 A anzuführen, dort wird eine Kabinenschutzvorrichtung für Arbeitsmaschinen offenbart.

### Aufgabe der Erfindung

Die Aufgabe der vorliegenden Erfindung ist es, die Nachteile aus dem Stand der Technik zu überwinden. Insbesondere soll ein Kabinenschutz bereitgestellt werden, der insbesondere eine händische Bedienung erleichtert und diese sicherer machen soll.

### Lösung der Aufgabe

Zur Lösung der Aufgabe führen die Merkmale nach dem Anspruch 1. Vorteilhafte Ausgestaltungen sind in den Unteransprüchen beschrieben.

In typischen Ausführungsbeispielen weist ein Kabinenschutz für eine Arbeitsmaschinenkabine ein erstes Frontgitter und ein zweites Frontgitter und eine Frontgitteraufnahme auf, wobei das erste Frontgitter in die Frontgitteraufnahme einschiebbar ist.

Es sind zwei End-Position des ersten Frontgitters vorgesehen, eine geöffnete Position und eine geschlossene Position. In der geöffneten Position ist das erste Frontgitter in der Frontgitteraufnahme aufgenommen. Das bedeutet, dass in der geöffneten Position ein bevorzugter Sichtbereich einer Arbeitsmaschinenkabine ungeschützt ist, dafür aber ein Blick aus der Arbeitsmaschinenkabine nicht durch das erste Frontgitter eingeschränkt wird.

In der geschlossenen Position liegt das erste Frontgitter auf dem zweiten Frontgitter auf, so dass die Arbeitsmaschinenkabine geschützt ist.

Das erste Frontgitter weist ein erstes Ende und ein gegenüberliegendes zweites Ende auf. An dem ersten Ende des ersten Frontgitters ist eine Laufrolle angeordnet.

Die Laufrolle des ersten Endes des ersten Frontgitters ist in einer Führung der Frontgitteraufnahme angeordnet.

In typischen Ausführungsbeispielen ist an der Frontgitteraufnahme eine Gasdruckfeder angeordnet, wobei die Gasdruckfeder in der geschlossenen Position kraftgebunden ist und in der geöffneten Position kraftentbunden ist. Hier sind auch andere geeignete Energie- bzw. Druckspeicher denkbar, beispielsweise Membrandruckspeicher oder einfache Spiralfedersysteme.

Es ist eine Kolbenstange der Gasdruckfeder mit der Laufrolle am ersten Ende des ersten Frontgitters wirkverbunden. Wirkverbunden bedeutet in diesem Zusammenhang, dass die Kolbenstange an einem Ende, welches einem Zylinder der Gasfeder gegenüberliegt, ein Druckstück aufweist, welches auf die Laufrolle in der Führung der Frontgitteraufnahme beaufschlagt.

Bei einer Bewegung des Druckstücks in Verbindung mit der Gasdruckfeder von einer kraftgebundenen hin zu einer kraftentbundenen Position wird die Laufrolle und damit auch das erste Frontgitter von einem zweiten Führungsende der Führung in Richtung eines ersten Führungsendes der Führung bewegt. Diese Bewegung ist abhängig von einer Länge der Kolbenstange der Gasdruckfeder. In Bevorzugten Ausführungsbeispielen reicht die Kolbenstange bis zu einem Viertel der Länge der Führung in diese ein. Die Länge der Kolbenstange der Gasdruckfeder richtet sich vorzugsweise nach der Größe des ersten Frontgitters bzw. der Größe der Arbeitsmaschinenkabine und kann daher variieren und entsprechend kürzer oder auch entsprechend länger ausgebildet sein.

Das bedeutet, dass die Laufrolle durch den Kolben der Gasdruckfeder so weit bewegt wird, bis die Gasdruckfeder kraftentbunden ist und die volle Länge der Kolbenstange aus dem Zylinder der Gasdruckfeder ausgefahren ist. Der verbleibende Einschubweg bis zum ersten Ende der Führung wird von diesem Punkt aus durch manuelles einschieben des ersten Frontgitters in die Frontgitteraufnahme vorgenommen.

In geöffneter Position liegt die Laufrolle an dem ersten Führungsende der Führung. In geschlossener Position liegt die Laufrolle an dem zweiten Führungsende der Führung. Dabei ist an dem zweiten Ende der Führung eine Erweiterung angeordnet, welche in der der geschlossenen Position die Laufrolle aufnimmt.

Dies führt zu den Vorteilen, dass bei einem manuellen Öffnen des ersten Frontgitters durch einen Benutzer, wobei mit Öffnen ein Einschieben des ersten Frontgitters in die Frontgitteraufnahme aus der geschlossenen Position in die geöffnete Position gemeint ist, gerade zu Beginn dieser nach oben in Richtung der Frontgitteraufnahme gerichteten Öffnungsbewegung kaum Kraft aufgewendet werden muss. Zudem wird durch die Unterstützung der Gasdruckfeder verhindert, dass es zu Verletzungen bei dem Benutzer, beispielsweise durch Quetschungen zwischen dem ersten Frontgitter und dem zweiten Frontgitter kommt, da ein Zurückschnellen des ersten Frontgitters auf das zweite Frontgitter verhindert wird. Dieser Vorteil ergibt sich auch bei der entgegengesetzten Bewegung. Dadurch, dass bei dem manuellen Schließen des ersten Frontgitters die Gasdruckfeder von einer kraftentbundenen Stellung in eine kraftgebundene Stellung bewegt werden muss, wird die Verletzungsgefahr weiter minimiert, da dies durch eine bewusste Bewegung bzw. Handlung erfolgen muss und eine unbeabsichtigte Bewegung des ersten Frontgitters so verhindert wird.

Die Frontgitteraufnehme weist eine Umlenkung auf. Diese Umlenkung kann ein Bolzen, eine Rolle, eine Walze, ein Zylinder oder auch eine andere Anordnung sein. Wesentlich ist jedoch, dass die Umlenkung in geschlossener Position das erste Ende des ersten Frontgitters gegen die Kraft der Gasdruckfeder positioniert. Zudem dient die Umlenkung als zusätzliche Auflage für das erste Frontgitter während einer Bewegung von der geschlossenen Position hin zu der geöffneten Position und umgekehrt.

An dem zweiten Ende des ersten Frontgitters ist eine Offen-Arretierung angeordnet. Die Offen-Arretierung ist das Gegenstück zu einem Arretierungszylinder, welcher an der Frontgitteraufnahme angeordnet ist. Weiterhin weist die Offen- Arretierung eine Einfahrrampe auf. Die Einfahrrampe besteht aus einem flächigen Blechteil und einem gebogenen Blechteil.

In der geöffneten Position des ersten Frontgitters liegt die Einfahrrampe mit dem gebogenen Blechteil auf dem Arretierungszylinder der Frontgitteraufnahme auf. Um in diese geöffnete Position zu gelangen wird das flächige Blechteil der Einfahrrampe, nach dem Vorbild einer umgedrehten Rampe, über den Arretierungszylinder geschoben bis der Arretierungszylinder in den Bereich des gebogenen Blechteils einfährt. Das Einfahren des Arretierungszylinders im Bereich des gebogenen Blechteils der Einfahrrampe führt auf vorteilhafte Weise dazu, dass die geöffnete Position genau erreicht und gehalten wird.

Dabei ist in bevorzugten Ausführungsbeispielen vorgesehen, dass eine Wölbung des gebogenen Blechteils der Einfahrrampe einer Ausformung des Arretierungszylinders angepasst ist, so dass dieser den Arretierungszylinder teilweise umfasst. Dies bringt den Vorteil mit sich, dass das erste Frontgitter in der geöffneten Position gehalten wird, bis eine belastbare Verbindung zwischen der Offen-Arretierung und dem Federstift mit der Öffnung des Arretierungszylinders hergestellt werden kann. Dadurch wird weiter die Sicherheit des Benutzers erhöht, da ein ungewolltes Zurückfahren des ersten Frontgitters aus der geöffneten Position in Richtung der geschlossenen Position vor der belastbaren Verbindung zwischen der Offen-Arretierung und dem Federstift mit der Öffnung des Arretierungszylinders verhindert wird.

Liegt die Offen-Arretierung mit der Einfahrrampe auf dem Arretierungszylinder in vorgesehener Weise auf, fährt ein federgelagerter Federstift der Offen-Arretierung in die Öffnung des Arretierungszylinders ein. Dadurch wird eine belastbare Verbindung zwischen der Offen-Arretierung und dem Arretierungszylinder hergestellt. Dies Verbindung kann durch das herausziehen des Federstiftes aus der Öffnung wieder gelöst werden.

Der Federstift kann an der Seite der Offen-Arretierung die von dem Arretierungszylinder abgewandt ist, manuell aus der Öffnung des Arretierungszylinders herausgezogen werden, wobei eine Federspannung überwunden werden muss.

Weiterhin ist vorgesehen, dass der Federstift in einer ausgefahrenen Position, in der er in der Öffnung eingefahren ist festgestellt werden kann. Ebenso kann der Federstift in der Position festgestellt werden, welche der Federspannung entgegensteht. Dies hat den Vorteil, dass die händische Bedienung und die Sicherheit weiter verbessert wird.

In der geschlossenen Position liegt das erste Frontgitter auf dem zweiten Frontgitter auf, wobei das erste Frontgitter mit dem zweiten Frontgitter über einen Verschluss verbunden ist. Bei dem Verschluss handelt es sich um einen Bügelverschluss, aber es können natürlich auch andere bekannte Verschlusssystem Verwendung finden, die eine Verbindung zwischen dem ersten Frontgitter und dem zweiten Frontgitter ermöglichen.

In bevorzugten Ausführungsbeispielen weist die Frontgitteraufnahme mehr als eine Führung auf, wobei auch das erste Frontgitter dementsprechend mehr Laufrollen aufweist. Jede Laufrolle kann dabei auch eine eigene Gasdruckfeder aufweisen. Es kann aber auch vorgesehen sein, dass nicht alle der weiteren Führungen Gasdruckfedern aufweisen.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 eine Frontansicht auf eine Arbeitsmaschinenkabine 2 mit geschlossenem Kabinenschutz 1;
Figur 2 eine Frontansicht auf eine Arbeitsmaschinenkabine 2 mit einem nahezu vollständig geöffneten Kabinenschutz 1;
Figur 3 eine geschnittene Ansicht einer Arbeitsmaschinenkabine 2 mit geschlossenem Kabinenschutz 1 entlang der Schnittlinie A aus Figur 1;
Figur 4 eine geschnittene Ansicht einer Arbeitsmaschinenkabine 2 mit teilweise geöffnetem Kabinenschutz 1 entlang der Schnittlinie A aus Figur 1;
Figur 5 eine geschnittene Ansicht einer Arbeitsmaschinenkabine 2 mit nahezu vollständig geöffnetem Kabinenschutz 1;
Figur 6 ein geschnittener Ausschnitt einer Frontgitteraufnahme 5 mit einem geschlossenen Kabinenschutz 1;
Figur 7 ein geschnittener Ausschnitt einer Frontgitteraufnahme 5 mit nach Figur 4;
Figur 8 ein geschnittener Ausschnitt einer Frontgitteraufnahme 5 mit einem nahezu vollständig geöffneten Kabinenschutz 1;
Figur 9 ein geschnittener Ausschnitt einer Frontgitteraufnahme 5 mit einem weiteren nahezu vollständig geöffneten Kabinenschutz 1;
Figur 10 ein geschnittener Ausschnitt einer Frontgitteraufnahme 5 mit einem vollständig geöffneten Kabinenschutz 1.

### Ausführungsbeispiel

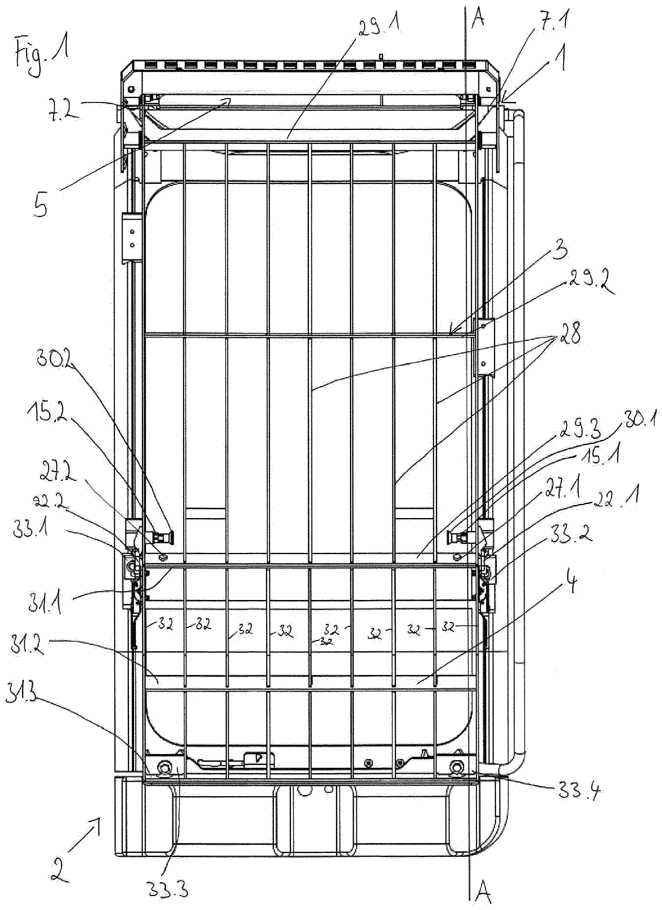

In Figur 1 ist eine Frontansicht auf eine Arbeitsmaschinenkabine 2 mit einem erfindungsgemässen Kabinenschutz 1 und einer Schnittlinie A dargestellt. Der Kabinenschutz 1 weist ein erstes Frontgitter 3 und ein zweites Frontgitter 4 auf. Dabei ist der Kabinenschutz 1 in einer geschlossenen Position dargestellt, wobei das erste Frontgitter 3 auf dem zweiten Frontgitter 4 aufliegt.

Das erste Frontgitter 3 besteht in vorliegenden Ausführungsbeispiel aus neun vertikalen Metallstreben 28, welche durch drei horizontale Metallstreben, nämlich einer ersten horizontalen Metallstrebe 29.1, einer zweiten horizontalen Metallstrebe 29.2 und einer dritten horizontalen Metallstrebe 29.3 in dazu orthogonaler Ausrichtung verbunden sind.

Das zweite Frontgitter 4 besteht in vorliegenden Ausführungsbeispiel ebenfalls aus neun weiteren vertikalen Metallstreben 32 sowie aus drei orthogonale zu den vertikalen Metallstreben 32 ausgerichteten weiteren horizontalen Metallstreben 31, nämlich einer ersten weiteren horizontalen Metallstrebe 31.1, einer zweiten weiteren horizontalen Metallstrebe 31.2 und einer dritten weiteren horizontalen Metallstrebe 31.3.

Weiterhin ist das zweite Frontgitter 4 über Anordnungen 33.1, 33.2, 33.3, 33.4 mit der Arbeitsmaschinenkabine 2 unbeweglich verbunden.

Das erste Frontgitter 3 liegt mit der dritten horizontalen Metallstrebe 29.3 auf der ersten weiteren horizontalen Metallstrebe 31.1 des zweiten Frontgitters 4 auf.

In vorliegendem Ausführungsbeispiel sind Verbindungselemente 27.1, 27.2 ersichtlich, welche eine Verbindung zwischen der dritten horizontalen Metallstrebe 29.3 des ersten Frontgitters 3 und der ersten weiteren horizontalen Metallstrebe 31.1 des zweiten Frontgitters 4 herstellen. Dabei handelt es sich um Bolzen die in eine Ausnehmung eingreifen, wobei ein Bolzen sowohl aus der dritten horizontalen Metallstrebe 29.3 des ersten Frontgitters 3 als auch aus der ersten weiteren horizontalen Metallstrebe 31.1 des zweiten Frontgitters 4 hervorgehen kann.

An einem zweiten Endes 14 des ersten Frontgitters 3, welches im Bereich der dritten horizontalen Metallstrebe 29.3 liegt, sind an der jeweils äußeren vertikalen Metallstrebe 28 sich zugewandte Offen-Arretierungen 15.1, 15.2 angeordnet. Diese beiden Offen-Arretierungen 15.1, 15.2 dienen zu einer Verbindung mit Arretierungszylindern 16.1, 16.2 der Frontgitteraufnahme 5, welche in dieser Figur nicht ersichtlich sind.

Das erste Frontgitter 3 wird zudem mit dem zweiten Frontgitter 4 über jeweils an den Außenseiten der jeweils äußeren vertikalen Metallstreben 28 und jeweils äußeren weiteren vertikalen Metallstreben 32 mittels Bügelverschlüssen 22.1, 22.2 miteinander verbunden.

Es ist ersichtlich, dass die Offen-Arretierungen 15.1, 15.2 mit einem Handgriff 30.1, 30.2 zum Bedienen eines nicht ersichtlichen Federstiftes der Offen-Arretierungen 15.1, 15.2 ausgebildet sind.

Weiterhin ist eine Frontgitteraufnahme 5 oberhalb der Arbeitsmaschinenkabine 2 in Teilbereichen ersichtlich, wobei eine Führung 7.1 und eine weiter Führung 7.2 teilweise ersichtlich sind.

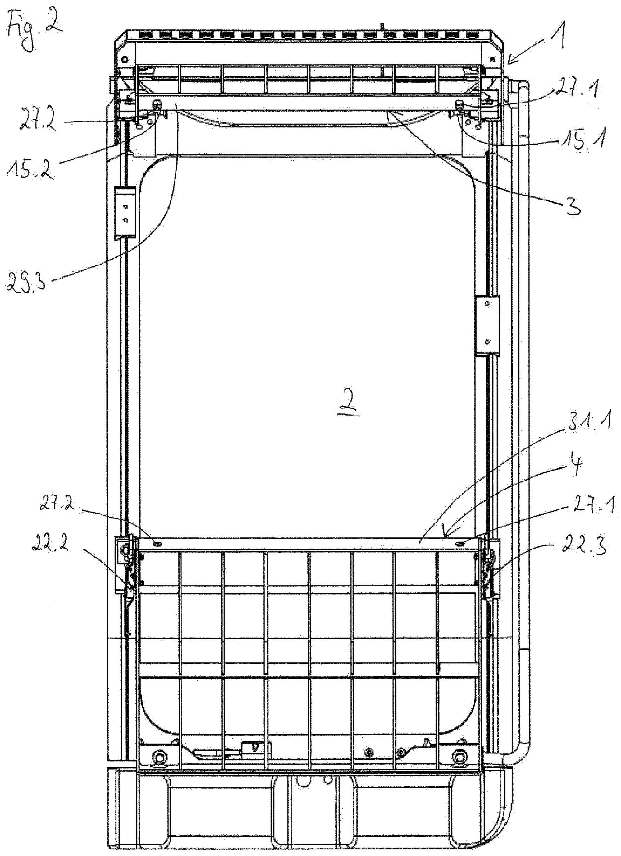

In Figur 2 ist ebenfalls eine Frontansicht auf die Arbeitsmaschinenkabine 2 mit einem erfindungsgemässen Kabinenschutz 1 dargestellt, wobei das erste Frontgitter 3 in einer nahezu vollständig geöffneten Position dargestellt ist.

Um unnötige Wiederholungen zu vermeiden, werden die in den vorherigen Figuren genannten und beschriebenen Elemente nicht wiederholt. Die bereits genannten und beschriebenen Elemente erhalten ihre beschriebene Geltung. Hinzu kommen die jeweils neu beschriebenen Elemente.

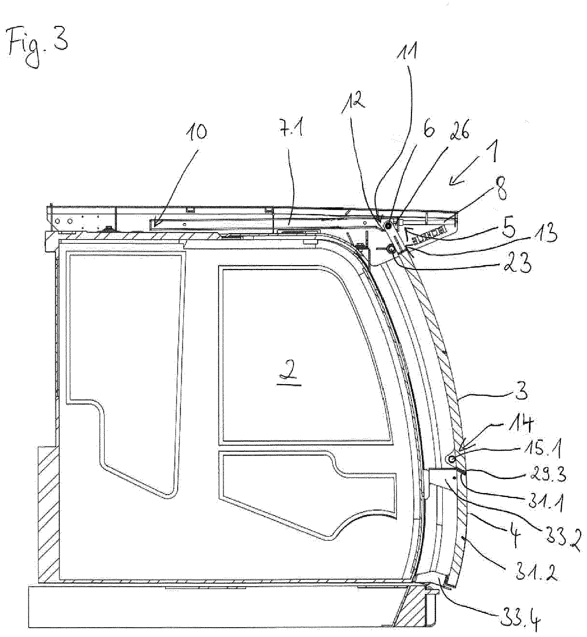

In Figur 3 ist eine geschnittene Ansicht der Arbeitsmaschinenkabine 2 mit geschlossenem Kabinenschutz 1 entlang der Schnittlinie A aus Figur 1 dargestellt.

Ersichtlich von der Frontgitteraufnahme 5 ist die Führung 7.1. Die Führung 7.1 weist ein erstes Führungsende 10 und ein zweites gegenüberliegendes zweites Führungsende 11 auf. Das zweite Führungsende 11 weist eine Erweiterung 12 auf. In dieser Erweiterung 12 ist bei der geschlossenen Position des ersten Frontgitters 3 eine Laufrolle 6 positioniert. Die Laufrolle 6 ist an einem ersten Ende 13 des ersten Frontgitters 3 angeordnet und wird in der Führung 7.1 zwischen dem ersten Führungsende 10 und dem zweiten gegenüberliegenden Führungsende 11 geführt und gehalten.

Unterhalb der Erweiterung 12 der Führung 7.1 ist in der Frontgitteraufnahme 5 eine Umlenkung 23 angeordnet. Im vorliegenden Ausführungsbeispiel ist die Umlenkung 23 als drehbeweglicher Bolzen ausgebildet. Natürlich kann die Umlenkung aber auch anders ausgebildet sein, solang die Umlenkung des ersten Frontgitters 3 erfolgt und für das ersten Frontgitters 3 eine Auflage bildet.

Weiterhin ist in der Frontgitteraufnahme 5 ein Gasdruckfeder 8 angeordnet. Die Gasdruckfeder 8 ist dabei in Verlängerung an das zweite Führungsende 11 der Führung 7.1 angeordnet. Ein Druckstück 26 ist mit einer nicht ersichtlichen Kolbenstange 9, die in vorliegender Abbildung 3 in einen Zylinder der Gasdruckfeder 8 gedrückt ist, verbunden. In der dargestellten Position, wird das Druckstück 26 durch die Gasdruckfeder 8 auf die Laufrolle 6 des ersten Frontgitters 3 gedrückt. In dieser Position ist die Gasdruckfeder 8 daher kraftgebunden. Die Kolbenstange 9 ist vollständig in den Zylinder der Gasdruckfeder 8 eingefahren.

In Figur 3 ist zudem ersichtlich, dass sowohl die dritte horizontale Metallstrebe 29.3 sowie die erste weitere horizontale Metallstrebe 31.1, von einem Blickwinkel aus der Arbeitsmaschinenkabine 2 gesehen, hin zu einem nicht dargestellten Boden abschüssig gewinkelt angeordnet sind. Dies Anordnung führt dazu, dass der Blick eines Fahrzeugführers, der aus der Arbeitsmaschinenkabine 2 herausschaut, lediglich minimal durch die Metallstreben eingeschränkt wird. Eine hin zu einem nicht dargestellten Boden vergleichsweise noch abschüssiger gewinkelte Anordnung ist auch bei der hier nicht ersichtlichen zweiten weitere horizontale Metallstrebe 31.1 vorgesehen.

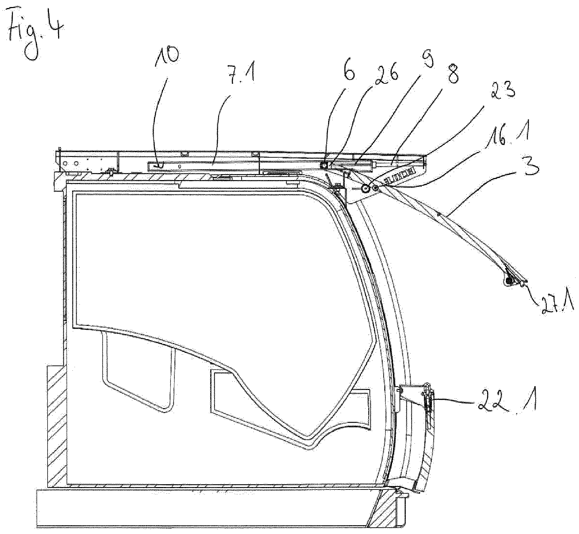

In Figur 4 ist eine geschnittene Ansicht der Arbeitsmaschinenkabine 2 mit teilweise geöffneten Kabinenschutz 1 entlang der Schnittlinie A aus Figur 1 dargestellt, wobei einzelne Elemente, wie beispielsweise das erste Frontgitter 3 und das zweite Frontgitter 4 teilweise durchsichtig abgebildet sind, um weitere Details aufzuzeigen.

Um unnötige Wiederholungen zu vermeiden, werden auch hier die in den vorherigen Figuren genannten und beschriebenen Elemente nicht wiederholt. Die bereits genannten und beschriebenen Elemente erhalten ihre beschriebene Geltung. Hinzu kommen die jeweils neu beschriebenen Elemente.

In Figur 4 ist ersichtlich wie das erste Frontgitter 3 auf der Umlenkung 23 aufliegt. Zudem ist zuerkennen wie die Gasdruckfeder 8 mit dem Druckstück 26 die Laufrolle 6 des ersten Frontgitters 3 innerhalb der Führung 7.1 in Richtung des ersten Führungsendes 10 drückt. Dabei ist genau die Position gezeigt, in der die Kolbenstange 9 maximal aus dem Zylinder der Gasdruckfeder 8 herausgefahren ist. In dieser Position ist die Gasdruckfeder 8 daher kraftentbunden. Die abgebildete Position wird daher auch ohne weiteres manuelles Zutun gehalten, da hin zu der geschlossenen Position des ersten Frontgitters 3 die Kolbenstange 9 wieder in den Kolben der Gasdruckfeder 8 gedrückt werden müsste und hin zu der geöffneten Position das erste Frontgitter 3 weiter über die Umlenkung 23 in Richtung des ersten Führungsendes 10 der Führung 7.1 gehoben werden müsste.

Weiterhin ist unterhalb der Gasdruckfeder 8 und neben der Umlenkung 23 an der Seite, die von der Arbeitsmaschinenkabine 2 abgewandt ist der Arretierungszylinder 16.1 angeordnet. Der Arretierungszylinder 16.1 ist in Figur 4 nur ersichtlich, da das erste Frontgitter 3 durchsichtig dargestellt ist.

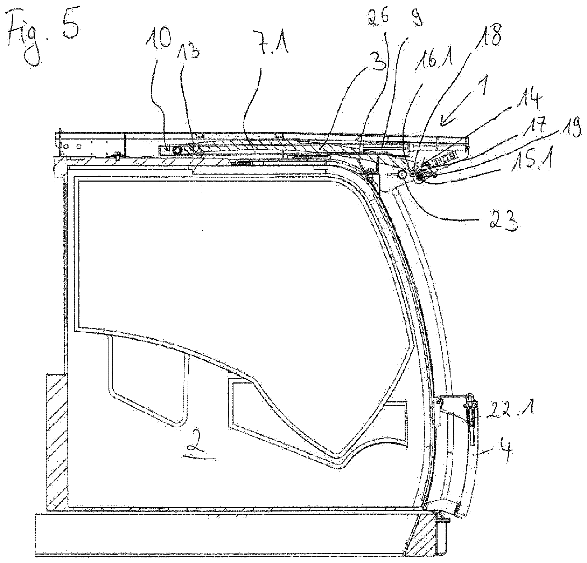

In Figur 5 ist eine geschnittene Ansicht der Arbeitsmaschinenkabine 2 mit nahezu vollständig geöffnetem Kabinenschutz 1 gezeigt. Dabei ist die Position zu erkennen, in der die geschlossene Position des ersten Frontgitters 3 in der Frontgitteraufnahme 5 nahezu erreicht ist. Die Einfahrrampe 17 liegt mit einem flächigen Blech 18 auf dem Arretierungszylinder 16.1 auf. Die geöffnete Position des ersten Frontgitters 3 ist daher noch nicht erreicht, da die Einfahrrampe 17 noch nicht mit einem gebogenen Blech 19 auf dem Arretierungszylinder 16.1 aufliegt.

Um unnötige Wiederholungen zu vermeiden, werden auch hier die in den vorherigen Figuren genannten und beschriebenen Elemente nicht wiederholt. Die bereits genannten und beschriebenen Elemente erhalten ihre beschriebene Geltung. Hinzu kommen die jeweils neu beschriebenen Elemente.

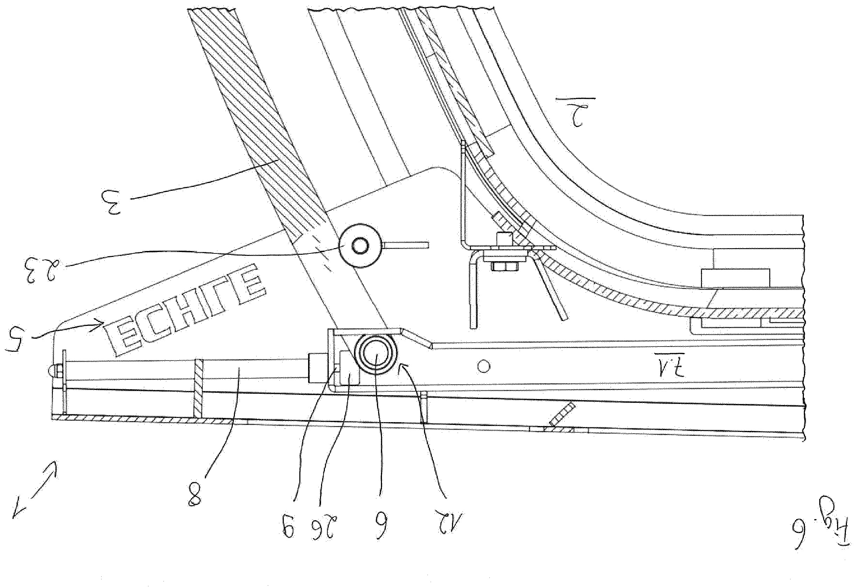

In Figur 6 ist ein vergrößerter Ausschnitt einer geschnittenen Frontgitteraufnahme 5 mit einem geschlossenen Kabinenschutz 1 dargestellt. Die Laufrolle 6 liegt in der Erweiterung der Führung 7.1, so dass das Druckstück 26 mit der Kolbenstange 9 in den Zylinder der Gasdruckfeder 8 gedrückt ist. Die Gasdruckfeder 8 liegt in der geschlossenen Position des ersten Frontgitters 3 daher in kraftgebundener Position vor.

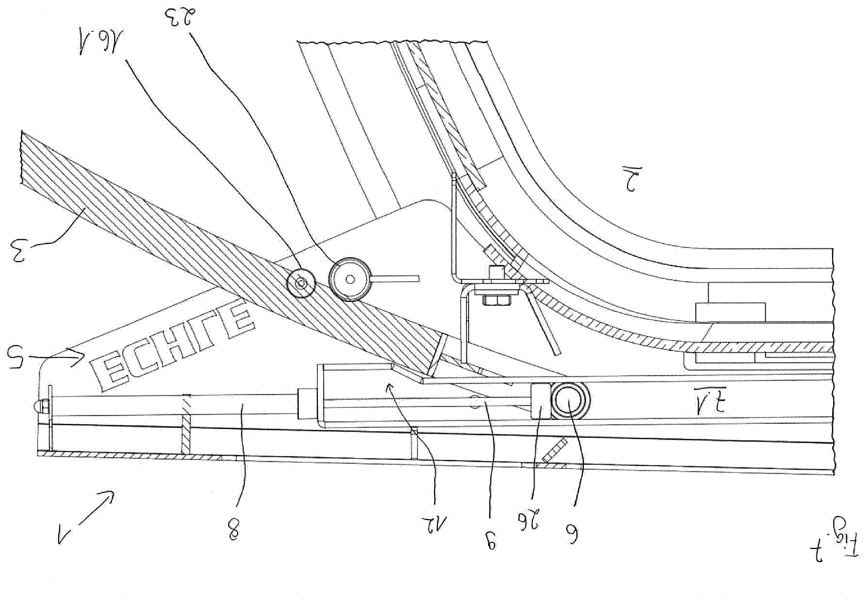

In Figur 7 ist ein vergrößerter Ausschnitt nach Figur 4 dargestellt, der die Frontgitteraufnahme 5 in geschnittener Form zeigt. Hier ist die Position ersichtlich, in der die Kolbenstange 9 maximal aus dem Zylinder der Gasdruckfeder 8 herausgefahren ist. In dieser Position ist die Gasdruckfeder 8 daher kraftentbunden. Das erste Frontgitter 3 wird über die Laufrolle 6 und die Führung 7.1 gehalten und liegt auf der Umlenkung 23 auf. Von dieser Position aus ist das erste Frontgitter 3 manuell durch einen Benutzer weiter und ohne das Zutun der Gasdruckfeder 8 zu bewegen, entweder hin in die geöffnete Position oder entgegen der kraftentbundene Position der Gasdruckfeder 8 hin zu der geschlossenen Position.

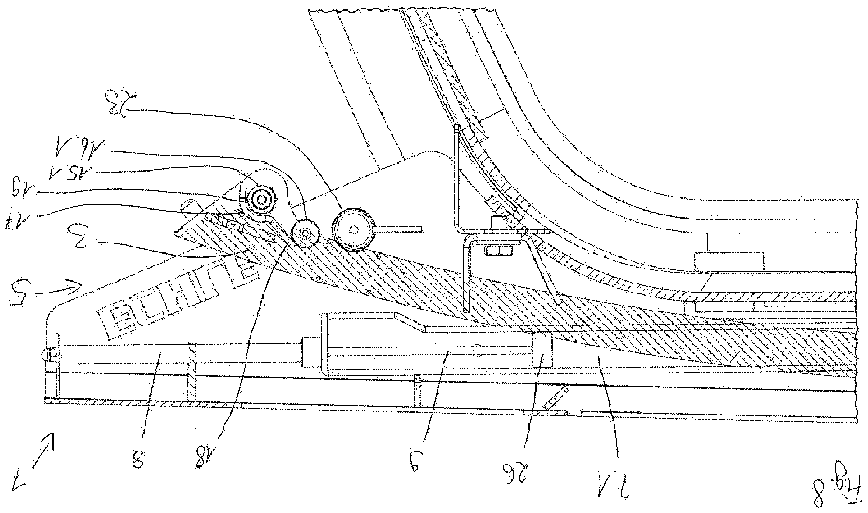

In Figur 8 ist ein geschnittener Ausschnitt der Frontgitteraufnahme 5 gezeigt, wobei der Kabinenschutz 1 nahezu vollständig geöffneten ist. Hier ist die Position dargestellt in der das flächige Blech 18 der Einfahrrampe 17 in Kontakt mit dem Arretierungszylinder 16.2 gekommen ist. Hier liegt das erste Frontgitter 3 noch auf der Umlenkung 23 auf.

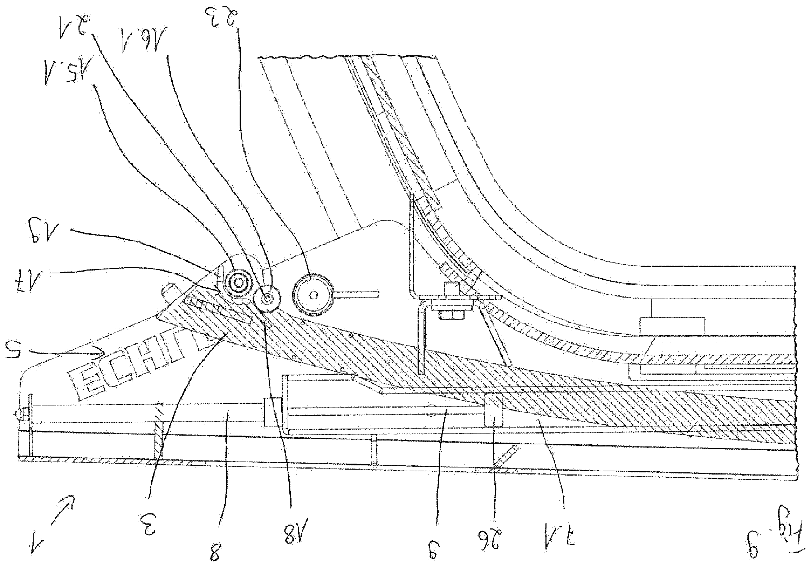

In Figur 9 ist ein weiterer geschnittener Ausschnitt der Frontgitteraufnahme 5 gezeigt, wobei der Kabinenschutz 1 ebenfalls nahezu vollständig geöffneten ist. Hier ist die Position dargestellt, in der das flächige Blech 18 der Einfahrrampe 17 bereits auf dem Arretierungszylinder 16.1, nach dem Vorbild einer umgedrehten Rampe, aufgefahren ist. Der Arretierungszylinder 16.1 weist eine Öffnung 21 auf. Hier liegt das erste Frontgitter 3 nun mit dem flächigen Blech 18 der Einfahrrampe 17 auf dem Arretierungszylinder 16.2 auf und hat keinen Kontakt mehr zu der Umlenkung 23.

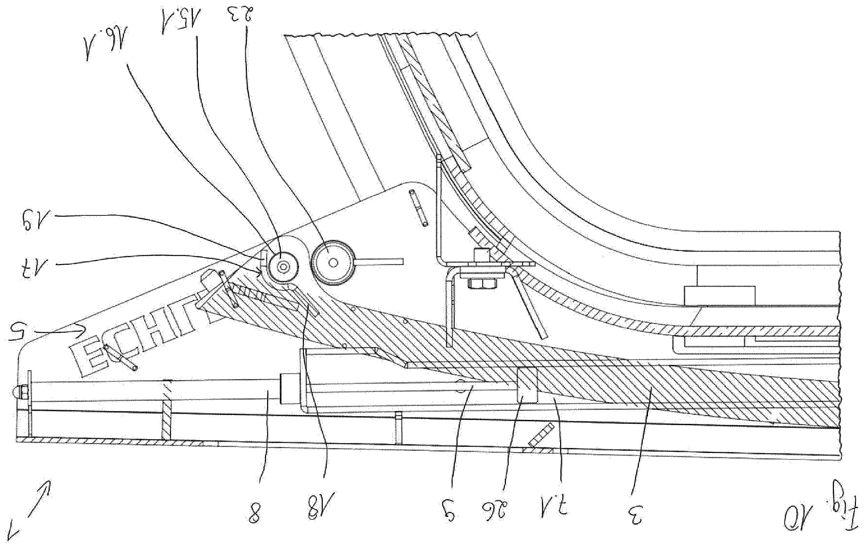

In Figur 10 ist auch ein geschnittener Ausschnitt der Frontgitteraufnahme 5 dargestellt. Hier ist die geöffnete Position des ersten Frontgitters 3 abgebildet, wobei das gebogene Blech 19 der Einfahrrampe 17 auf dem Arretierungszylinder 16.2 aufliegt. Dabei ist der Arretierungszylinder 16.1 der Frontgitteraufnahme 5 deckungsgleich zu der Offen-Arretierung 15.1 des ersten Frontgitters angeordnet, so dass hier über einen nicht dargestellten Federstift der Offen-Arretierung 15.1 der in eine Öffnung 21 des Arretierungszylinder 16.1 einfährt, eine belastbare Verbindung zwischen der Frontgitteraufnahme 5 und dem ersten Frontgitter 3 hergestellt wird.

Bezugnehmend auf die Figuren 1 bis 10 erklärt sich die Funktionsweise der erfindungsgemässen Vorrichtung folgendermassen:
Der erfindungsgemässe Kabinenschutz 1 weist ein erstes Frontgitter 3 und ein zweites Frontgitter 4 auf. Das erste Frontgitter 3 ist durch einen Benutzer aus der geschlossenen Position in eine geöffnete Position bewegbar. Dabei wird das erste Frontgitter 3, welches sich in der geschlossenen Position befindet, zunächst von dem zweiten Frontgitter 4 gelöst, in dem die Verschlüsse 22.1, und 22.2, welche vorzugsweise Bügelverschlüsse sind, gelöst werden. In dieser Position ist die Gasdruckfeder 8 kraftgebunden.

Danach kann das erste Frontgitter 3 mit der Unterstützung der Gasdruckfeder 8, dessen Kolbenstange 9 das Druckstück 26 an die Laufrolle 6 des ersten Frontgitters 3 drückt, in die Frontgitteraufnahme 5 bzw. weiter in die Führung 7.1, 7.2 in Richtung des ersten Führungsendes 10 eingeschoben werden. Ein gefährliches Zurückfahren des ersten Frontgitters 3 in die geschlossene Position kann durch die Arbeit der Gasdruckfeder 8 nicht selbstständig erfolgen, wodurch die bisher enorme Verletzungsgefahr dabei nicht mehr besteht.

Sobald die Kolbenstange 9 der Gasdruckfeder 8 vollständig aus dieser ausgefahren ist, ist die kraftentbundene Position der Gasdruckfeder 8 erreicht. Von dieser Position aus schiebt der Benutzer das ersten Frontgitters 3 weiter in Richtung des ersten Führungsendes 10 der Führung 7.1, 7.2 in die Frontgitteraufnahme 5 hinein, wobei das erste Frontgitter 3 dabei auf der Umlenkung 23 aufliegt bis die Einfahrrampe 17 des ersten Frontgitters 3 auf den Arretierungszylinder 16.1, 16.2 aufgeschoben wird.

Liegt die Einfahrrampe 17 mit dem gebogenen Blechteil 19 auf dem Arretierungszylinder 16.1, 16.2 auf, befinden sich die Offen-Arretierung 15.1, 15.2 des ersten Frontgitters 3 und der Arretierungszylinder 16.1, 16.2 der Frontgitteraufnahme 5 zueinander in Deckung, so dass eine belastbare Verbindung zwischen dem ersten Frontgitters 3 und der Frontgitteraufnahme 5 hergestellt werden kann.

Hierbei hat die Auflage des gebogenen Blechteils 19 auf dem Arretierungszylinder 16.1, 16.2 den Vorteil, dass dadurch bereits eine Verbindung hergestellt wird, die verhindert, dass sich das erste Frontgitter 3 wieder ungewollt in Richtung der geschlossenen Position zurückbewegt, bis die Verbindung zwischen dem Arretierungszylinder 16.1, 16.2 und der Offen-Arretierung 15.1, 15.2 erfolgt ist.

Obwohl nur ein bevorzugtes Ausführungsbeispiel der Erfindung beschrieben und dargestellt wurde, ist es offensichtlich, dass der Fachmann zahlreiche Modifikationen hinzufügen kann, ohne Wesen und Umfang der Erfindung zu verlassen. Insbesondere können in der Frontgitteraufnahme 5 neben einer Führung 7.1 auch weitere Führungen 7.2 angeordnet sind, wobei dann auch mehrere Laufrollen an dem ersten Frontgitter 3 angeordnet sind. Natürlich verfügen weitere Führungen 7.1, 7.2 vorzugsweise auch alle über weitere Gasdruckfedern 6. Weiterhin sind Variationen an den Verschlüssen 22.1, 22.2, sowie den Verbindungselementen 27.1, 27.2 vorgesehen.

### Bezugszeichenliste

| | | | |
|---|---|---|---|
| 1 | Kabinenschutz | 31.1 | erste weiter horizontale Metallstrebe |
| 2 | Arbeitsmaschinenkabine | 31.2 | zweite weiter horizontale Metallstrebe |
| 3 | erstes Frontgitter | 31.3 | dritte weiter horizontale Metallstrebe |
| 4 | zweites Frontgitter | 32 | weiter vertikale Metallstreben |
| 5 | Frontgitteraufnahme | 33.1-33.4 | Anordnungen |
| 6 | Laufrolle | A | Schnittlinie |
| 7.1, 7.2 | Führung | | |
| 8 | Gasdruckfeder | | |
| 9 | Kolbenstange | | |
| 10 | erstes Führungsende | | |
| 11 | zweites Führungsende | | |
| 12 | Erweiterung | | |
| 13 | erstes Ende | | |
| 14 | zweites Ende | | |
| 15.1, 15.2 | Offen-Arretierung | | |
| 16.1, 16.2 | Arretierungszylinder | | |
| 17 | Einfahrrampe | | |
| 18 | flächiges Blechteil | | |
| 19 | gebogenes Blechteil | | |
| 20 | | | |
| 21 | Öffnung | | |
| 22.1, 22.2 | Verschluss | | |
| 23 | Umlenkung | | |
| 26 | Druckstück | | |
| 27.1, 27.2 | Verbindungselement | | |
| 28 | vertikale Metallstreben | | |
| 29.1 | erste horizontale Metallstrebe | | |
| 29.2 | zweite horizontale Metallstrebe | | |
| 29.3 | zweite horizontale Metallstrebe | | |
| 30 | Handgriff | | |

## Patentansprüche

1. Kabinenschutz (1) für eine Arbeitsmaschinenkabine (2) mit einem ersten Frontgitter (3) und einem zweiten Frontgitter (4) und einer Frontgitteraufnahme (5), wobei die Frontgitteraufnahme (5) in geöffneter Position das erste Frontgitter (3) aufnimmt und in geschlossener Position das erste Frontgitter (3) auf dem zweiten Frontgitter (4) aufliegt, wobei eine Laufrolle (6) des ersten Frontgitters (3) in einer Führung (7.1, 7.2) der Frontgitteraufnahme (5) angeordnet ist und wobei das erste Frontgitter (3) an einem ersten Ende (13) die Laufrolle (6) aufweist und an einem zweiten Ende (14) eine Offen-Arretierung (15.1, 15.2) aufweist,
**dadurch gekennzeichnet, dass** die Frontgitteraufnahme (5) eine Gasdruckfeder (8) aufweist, welche in geschlossener Position kraftgebunden ist und in geöffneter Position kraftentbunden ist,
dass die Offen-Arretierung (15.1, 15.2) eine Einfahrrampe (17) mit einem flächigen Blechteil (18) und einem gebogenen Blechteil (19) aufweist, wobei in geöffneter Position die Einfahrrampe (17) mit dem gebogenen Blechteil (19) auf einem Arretierungszylinder (16.1, 16.2) der Frontgitteraufnahme (5) aufliegt und ein Federstift der Offen-Arretierung (15.1, 15.2) in eine Öffnung (21) des Arretierungszylinders (16.1, 16.2) eingefahren ist.

2. Kabinenschutz (1) nach Anspruch 1, **dadurch gekennzeichnet, dass** eine Kolbenstange (9) der Gasdruckfeder (8) mit der Laufrolle (6) des ersten Frontgitters (3) wirkverbunden ist.

3. Kabinenschutz (1) nach Anspruch 1, **dadurch gekennzeichnet, dass** die Laufrolle (6) in geöffneter Position an einem ersten Führungsende (10) der Führung (7) ist und in geschlossener Position die Laufrolle (6) an einem zweiten Führungsende (11) in einer Erweiterung (12) der Führung (7.1, 7.2) ist.

4. Kabinenschutz (1) nach Anspruch 1, **dadurch gekennzeichnet, dass** die Frontgitteraufnahme (5) eine Umlenkung (23) aufweist, wobei die Umlenkung (23) in geschlossener Position das erste Ende (13) des ersten Frontgitters (3) gegen die Kraft der Gasdruckfeder (8) positioniert.

5. Kabinenschutz (1) nach Anspruch 1, **dadurch gekennzeichnet, dass** in geschlossener Position das erste Frontgitter (3) mit dem zweiten Frontgitter (4) mit einem Verschluss (22.1, 22.2) verbunden ist.

6. Kabinenschutz (1) nach Anspruch 5, **dadurch gekennzeichnet, dass** der Verschluss (22.1, 22.2) ein Bügelverschluss ist.

## Claims

1. Cabin protection (1) for a working machine cabin (2) with a first front grid (3) and a second front grid (4) and a front grid receptacle (5), wherein the front grid receptacle (5) receives the first front grid (3) in the open position and the first front grid (3) rests on the second front grid (4) in the closed position, wherein a roller (6) of the first front grid (3) is arranged in a guide (7.1, 7.2) of the front grid receptacle (5) and wherein the first front grid (3) has the roller (6) at a first end (13) and has an open locking (15.1, 15.2) at a second end (14),
**characterized in that**,
the front grid receptacle (5) has a gas pressure spring (8) which is force-bound in the closed position and is force-released in the open position, that the open locking (15.1, 15.2) has a drive-in ramp (17) with a flat sheet-metal part (18) and a bent sheet-metal part (19), wherein in the open position the drive-in ramp (17) with the bent sheet-metal part (19) rests on a locking cylinder (16. 1, 16.2) of the front grid receptacle (5) and a spring pin of the open locking (15.1, 15.2) is retracted into an opening (21) of the locking cylinder (16.1, 16.2).

2. Cabin protection (1) according to claim 1, **characterized in that** a piston rod (9) of the gas pressure spring (8) is operatively connected to the roller (6) of the first front grid (3).

3. Cabin protection (1) according to claim 1, **characterized in that** the roller (6) in open position is at a first guide end (10) of the guide (7) and in closed position the roller (6) is at a second guide end (11) in an extension (12) of the guide (7.1, 7.2).

4. Cabin protection (1) according to claim 1, **characterized in that** the front grid receptacle (5) comprises a deflection (23), wherein the deflection (23) in closed position positions the first end (13) of the first front grid (3) against the force of the gas spring (8).

5. Cabin protection (1) according to claim 1, **characterized in that** in the closed position the first front grid (3) is connected to the second front grid (4) by means of a closure (22.1, 22.2).

6. Cabin protection (1) according to claim 5, **characterized in that** the closure (22.1, 22.2) is a clip closure.

## Revendications

1. Protection de cabine (1) pour une cabine de machine de travail (2) comportant une première grille frontale (3) et une seconde grille frontale (4) et un réceptacle de grille frontale (5), le réceptacle de grille frontale (5) recevant la première grille frontale (3) dans la position fermée et la première grille frontale (3) reposant sur la seconde grille frontale (4) dans la position fermée, un galet de roulement (6) de la première grille frontale (3) étant disposé dans un guide (7.1, 7.2) du réceptacle de grille frontale (5) et la première grille frontale (3) présentant, au niveau d'une première extrémité (13), le galet de roulement (6) et présentant, au niveau d'une seconde extrémité (14), un dispositif de verrouillage ouvert (15.1, 15.2), **caractérisée en ce que** le réceptacle de grille frontale (5) présente un vérin à gaz (8), lequel, dans la position fermée, est relié par une force et, dans la position ouverte, est détaché de la force, **en ce que** le dispositif de verrouillage ouvert (15.1, 15.2) présente une rampe d'entrée (17) comportant une pièce en tôle plate (18) et une pièce en tôle incurvée (19), dans la position ouverte, la rampe d'entrée (17) reposant avec la pièce en tôle incurvée (19) sur un cylindre de dispositif de verrouillage (16.1, 16.2) du réceptacle de grille frontale (5) et une goupille élastique du dispositif de verrouillage ouvert (15.1, 15.2) étant introduite dans une ouverture (21) du cylindre de dispositif de verrouillage (16.1, 16.2).

2. Protection de cabine (1) selon la revendication 1,
**caractérisée en ce qu'**une tige de piston (9) du vérin à gaz (8) est reliée de manière fonctionnelle au galet de roulement (6) de la première grille frontale (3).

3. Protection de cabine (1) selon la revendication 1, **caractérisée en ce que,** dans la position ouverte, le galet de roulement (6) se trouve au niveau d'une première extrémité de guide (10) du guide (7) et, dans la position fermée, le galet de roulement (6) se trouve au niveau d'une seconde extrémité de guide (11) dans un élargissement (12) du guide (7.1, 7.2).

4. Protection de cabine (1) selon la revendication 1, **caractérisée en ce que** le réceptacle de grille avant (5) présente un renvoi (23), le renvoi (23) positionnant, dans la position fermée, la première extrémité (13) de la première grille frontale (3) à l'encontre de la force du vérin à gaz (8).

5. Protection de cabine (1) selon la revendication 1, **caractérisée en ce que,** dans la position fermée, la première grille frontale (3) est reliée à la seconde grille frontale (4) par une fermeture (22.1, 22.2).

6. Protection de cabine (1) selon la revendication 5, **caractérisée en ce que** la fermeture (22.1, 22.2) est une fermeture à étrier.
